Europäisches Patentamt

European Patent Office

Office européen des brevets

(11) Numéro de publication: **0 000 461**
**B1**

# FASCICULE DE BREVET EUROPEEN

(1) Date de publication du fascicule du brevet: **05.05.82**

(51) Int. Cl.³: **C 02 F 3/34**

(1) Numéro de dépôt: **78400049.9**

(22) Date de dépôt: **03.07.78**

(54) *Procédé de dénitrification biologique d'effluents et support actif utilisé dans ce procédé.*

(30) Priorité: **08.07.77 FR 7721119**

(43) Date de publication de la demande:
**24.01.79 Bulletin 79/2**

(45) Mention de la délivrance du brevet:
**05.05.82 Bulletin 82/18**

(84) Etats contractants désignés:
**BE DE FR GB LU NL**

(56) Documents cités:
**FR - A - 2 147 522**
**US - A - 3 709 364**
**US - A - 3 829 377**

(73) Titulaire: **P C U K PRODUITS CHIMIQUES UGINE KUHLMANN**
**Service Propriété Industrielle Tour Manhattan**
**F-92087 Paris La Defense 2 Cédex 21 (FR)**

(72) Inventeur: **Cabane, Bruno**
**175 Boulevard de la République**
**F-92210 Saint-Cloud (FR)**

(74) Mandataire: **Monceaux, Pierre et al,**
**PRODUITS CHIMIQUES UGINE KUHLMANN**
**Service Propriété Industrielle**
**Tour Manhattan Cédex 21 F-92087 Paris La Defense (FR)**

**0 000 461**

Procédé de dénitrification biologique d'effluents et support actif utilisé dans ce procédé

La présente invention concerne un procédé biologique de dénitrification ayant de hautes performances.

Les procédés actuellement connus permettent une élimination des nitrates, mais celli-ci est relativement lente, et peu nombreux sont ceux pouvant être utilisés pour des eaux usées industrielles.

Parmi ceux-ci, les procédés biologiques s'appliquent principalement aux effluents urbains peu chargés en nitrates (de l'ordre de 100 mg/l) et ceux qui permettent d'opérer sur des concentrations plus élevées (3,5 g/l d'azote nitrique et plus) ont des vitesses de dénitrification de l-ordre de 1 à 1,5 mg d'azote par litre et part heure.

Par ailleurs, la dénitrification étant effectuée à partir d'une flore complexe non contrôlée, les capacités de dénitrification d'un réacteur sont difficilement prévisibles.

La demanderesse a mis au point un procédé applicable en particulier aux eaux usées industrielles, permettant de réduire l'azote nitrique présent dans des effluents à des concentrations pouvant atteindre 10 g/l, et ceci à une vitesse élevée de transformation, tout en minimisant les concentrations de substrat carboné nécessaire pour la dénitrification. En particulier, les performances obtenues dans ce procédé avec l'utilisation d'un réacteur à lit fluide, sont supérieures à toutes celles connues pour le même type de réacteur, comme décrit par J. S. JERIS et coll. Journal W.P.C.F. Vol. 46 No 9 — Sept. 1974 (2043—2057), B. ERICSSON Journal W.P.C.F. Vol. 47 No. 4 — avril 1975 (727—740), C. W. FRANCIS et coll. Water Res. Vol. 11 (1977) (289—294), F. E. CLARK et coll. INIS Atomindex 7 (8) 1976 Abstr. No. 2379 73 et D. J. R. DODD et coll. Water Res. Vol. 9 (1975) (323—328).

Ce procédé consiste à fabriquer un support actif de dénitrification formé d'une part de bactéries dénitrifiantes sélectionnées et d'autre part de carbonate de calcium très fin. Le procédé est caractérisé par la sélection préalable d'une flore dénitrifiante adaptée à un substrat carboné exogène donné contenant du nitrate de calcium. Ce support formé in situ peut être constitué d'un noyau central (charbon ou $CaCO_3$) sur lequel viennent se fixer les bactéries dénitrifiantes sélectionnées et le carbonate de calcium formé par le réaction de dénitrification. L'addition éventuelle d'un mélange d'oligo-éléments permet d'augmenter les vitesses de dénitrification.

Le support actif de la dénitrification obtenu par le procédé de la demanderesse peut être employé dans n'importe quelle sorte de réacteur de dénitrification (réactuer homogène, réacteur colonne à lit fixe ou à lit fluide).

Les souches de bactéries présentant une activité dénitrifiante sont sélectionnées en fonction due substrat carboné organique utilisé dans la dénitrification (alcools, effluent urbain, effluent d'usines), en fonction du type des nitrates et en fonction de la concentration de ces derniers.

Ces souches sont soumises à un enrichissement par repiquages successifs en milieu liquide en réalisant la meilleure anaérobiose possible. Les milieux employés sont du type de celui décrit ci-dessous avec addition éventuelle de yeast extract à raison de 1 g/l.

Pour 1 l d'eau distillée:—
— solution saline standard                50 ml
— nitrate de potassium                    5 g
— carbonate de calcium                    5 g
— solution d'oligoéléments de Kaiser      1 ml
— substrat carboné (méthanol, éthanol)    1 g

Les souches dénitrifiantes enrichies ainsi obtenues sont ensuite isolées, l'isolement étant réalisé sur milieu solide en jar test d'anaérobiose. La croissance des colonies nécessite 8 jours à 30°C.

Les souches sélectionnées sont mises en préculture dans un réacteur en anaérobiose avec un substrat de nitrate et de carbone afin de permettre une induction des activités dénitrifiantes ainsi qu'une production des biomasses ayant cette activité.

La biomasse est ensuite récoltée par centrifugation ou décantation avant d'être réensemencée dans les effluents à dénitrifier. L'effluent avant ensemencement est éventuellement dégazé par des méthodes convenables (barbotage d'azote, chauffage, addition de sulfites).

Les effluents ainsi ensemencés peuvent alimenter en continu:
— soit un réacteur homogène agité,
— soit un réacteur homogène rempli d'un support pour la fixation des microorganismes, (ce support est fabriqué en fermenteur à partir d'un noyau central formé de charbon entouré de carbonate de calcium très fin ou par tout autre support neutre convenable (grains de $CaCO_3$ par exemple), sur lequel viennent se fixer, par adsorption, les bactéries dénitrifiantes),
— soit un réacteur colonne garni d'un lit fixe,
— soit un réacteur colonne à lit fluidisé en permanence ou par intermittence (le support dans ces deux derniers cas est celui décrit précédemment).

2

**0 000 461**

Connaissant les caractéristiques cinétiques de la souche (KS substrat, vitesse de dénitrification ...) on peut prévoir la capacité de dénitrification du réacteur, ce qui est nouveau.

Le démarrage du procédé consiste d'abord en un recyclage intégral de l'effluent chargé de microorganismes. Ce recyclage est nécessaire d'une part pour permettre l'induction de l'activité dénitrifiante, d'autre part pour permettre une fixation maximum des microorganismes sur le support.

Le $CaCO_3$ et les bactéries dénitrifiantes sont formés au cours d'une même réaction. Cette réaction est une réaction de dénitrification de $Ca(NO_3)_2$; elle peut être effectuée par conséquent en début d'opération de dénitrification, avec l'appareillage prévu pour le traitement définitif. Le support actif de dénitrification ainsi formé s'est avéré très performant dans les divers réacteurs utilisés et particulièrement dans des réacteurs à lit fluidisé.

La marche en continu est instaurée lorsque l'activité dénitrifiante est considérée comme suffisante, c'est-à-dire lorsqu'après avoir augmenté progressivement les taux de dilution on obtient dans l'effluent une concentration résiduelle de nitrate ne dépassant pas le taux désiré.

La température de dénitrification peut varier de 5 à 40°C, mais se situe préférentiellement aux environs de 30°C.

La dénitrification est conduite de manière à avoir un pH de sortie basique facilitant la carbonatation. Le carbonate de calcium entourant progressivement la particule de charbon, est un sous-produit de la dénitrification. Il joue également le rôle de tampon de pH.

Les exemples suivants illustrent l'invention sans toutefois la limiter.

Exemples 1 à 5

Réacteur homogène 18 l utiles

Azote nitrique: $KNO_3$

Substrat carboné: glucose

Support et préculture: une préculture est faite en anaérobiose sur glucose avec $Ca(NO_3)_2+CaCO_3$ à partir d'une souche du genre Pseudomonas préalablement caractérisée comme étant dénitrifiante. Cette préculture permet d'obtenir les boues dénitrifiantes nécessaires pour la fabrication du support activé de dénitrification.

Pour ce faire, on ensemence un réacteur homogène avec la bactérie dénitrifiante. Dans ce réacteur est placé un milieu de dénitrification constitué d'un substrat carboné organique (ici du glucose) et obligatoirement de nitrate de calcium. On peut additionner au milieu de dénitrification du charbon pulvérulent qui servira de support primaire à la fixation, d'une part des grains de carbonate de calcium, formés au cours de la réaction de dénitrification et, d'autre part, des bactéries dénitrifiantes qui se sont développées dans le milieu de dénitrification. Les boues constituées se révèlent très actives au point de vue dénitrification. Elles peuvent être utilisées avec n'importe quel type de réacteur et avec n'importe quelle source de substrat.

### Résultats

| Azote nitrique influent: mg/l | Temps de séjour heures | % Epuration azotée |
|---|---|---|
| 700 | 60 | 99,9 |
| 1400 | 60 | 99,3 |
| 2100 | 60 | 98 |
| 2800 | 120 | 99,3 |
| 8400 | 130 | 90 |

Exemple 6

Le support $CaCO_3$ avec sa biomasse dénitrifiante a été fabriqué au préalable dans un réacteur homogène comme dans l'exemple 1: souche dénitrifiante du genre Pseudomonas ensemencé dans un milieu contenant $Ca(NO_3)_2+$charbon fin+méthanol. La culture est maintenue en anaérobiose.

On additionne au milieu de dénitrification une solution d'oligoéléments, (1 ml/l).

Solution d'oligoéléments

| | | |
|---|---|---|
| $MgSO_4$ | 125 mg | |
| $K_2HPO_4$ | 60 mg | |
| $CuSO_4, 5 H_2O$ | 0,6 mg | |
| $FeCl_3, 6 H_2O$ | 2,4 mg | |
| KI | 0,8 mg | |
| $MnSO_4, H_2O$ | 3 mg | pour 1 litre |
| $Na_2MoO_4, 2 H_2O$ | 2 mg | d'eau |
| $ZnSO_4, 7 H_2O$ | 2 mg | distillée |

3

| | |
|---|---|
| H₃BO₃ | 0,2 mg |
| Co(NO₃)₂, 6 H₂O | 0,05 mg |
| CdSO₄, 3 H₂O | 0,05 mg |
| H₃PO₄ à 95% | 20 mg |
| Réacteur colonne à lit fluidisé | 1,25 l utile |
| Azote nitrique | Ca(NO₃)₂ (600 mg/l d'-azote nitrique) |
| Substrat carboné | Méthanol |
| Temps de séjour | 0,70 h |
| Taux d'épuration | 99,5% |
| N éliminé | 20,5 kg/j/m³ de réacteur |

Exemple 7

Mêmes conditions opératoires que dans l'exemple 6. On fait varier seulement le temps de séjour.

| | |
|---|---|
| Temps de séjour | 1,15 h |
| Taux d'épuration | 99,9% |
| N éliminé | 12,3 kg/j/m³ de réactuer |

Exemple 8

Réacteur: colonne lit fluide volume utile: 1,25 l

Azote nitrique: Ca(NO₃)₂ (650 mg/l d'azote nitrique)

Substrat carboné: acide acrylique

Support et préculture: la préparation a été faite comme dans l'exemple 6, le méthanol étant remplacé par de l'acide acrylique.

| | |
|---|---|
| Temps de séjour | 1,8 h |
| Taux d'épuration azotée | 97,5% |
| N éliminé | 8,4 kg/j/m³ |

**Revendications**

1. Procédé de dénitrification biologique des effluents pouvant contenir jusqu'à 10 g/l d'azote nitrique, caractérisé par la mise en contact du mileu à dénitrifier avec des souches de bactéries ayant une activité dénitrifiante ayant subi une préculture dans un milieu de dénitrification contenant un substrat de nitrate de calcium, dans des conditions anaérobies, en présence de matières hydrocarbonées de façon à former in situ un support actif de dénitrification contenant les bactéries dénitrifiantes et du carbonate de calcium en grains.

2. Procédé selon la revendication 1 dans lequel les bactéries dénitrifiantes sont sélectionnées par repiquages successifs dans des milieux liquides constitués en tenant compte de la nature du substrat carboné, du type des nitrates et de la concentration de ces derniers dans les effluents à traiter.

3. Procédé selon la revendication 1 où le support actif est constitué d'un noyau central sur lequel viennent se fixer les bactéries dénitrifiantes sélectionnées et le carbonate de calcium formé par la réaction de dénitrification.

4. Procédé selon la revendication 3 dans lequel le noyau central est constitué de charbon ou de grains de carbonate de calcium.

5. Procédé selon la revendication 1 dans lequel la vitesse de dénitrification est augmentée par l'addition d'un mélange d'oligoéléments.

6. Procédé selon l'une des revendications 1 à 5 dans lequel l'effluent à traiter est un effluent industrial.

7. Support actif de dénitrification formé selon le procédé de l'une des revendications 1 à 4.

**Patentansprüche**

1. Verfahren zur biologischen Denitrifikation von Abwässern, die bis zu 10 g/l salpetersauren Stickstoff enthalten können, dadurch gekennzeichnet, daß man das zu denitrifizerende Milieu unter anaeroben Bedingungen in Gegenwart von Kohlenwasserstoffmaterialien mit Bakterienstämmen in Berührung bringt, die eine denitrifizierende Wirkung haben und einer Vorkultur in einem denitrifizierenden, ein Calcium-nitrat-Substrat enthaltenden Milieu unterworfen wurden, um in situ einen aktiven Träger für die Denitrifizierung zu bilden, der die denitrifizierenden Bakterien und Calciumcarbonatkörner enthält.

2. Verfahren nach Anspruch 1, bei dem die denitrifizierenden Bakterien durch aufeinanderfolgendes Umsetzen in flüssige Milieus selektiert werden, die unter Berücksichtigung der Natur des kohlenstoffhaltigen Substrats, des Typs von Nitraten und ihrer Konzentration in den zu behandelnden Abwässern hergestellt sind.

3. Verfahren nach Anspruch 1, bei dem der aktive Träger aus einem zentralen Kern gebildet wird, auf dem die selektierten denitrifizierenden Bakterien und das durch die Denitrifikation gebildete Calciumcarbonat fixiert werden.

4. Verfahren nach Anspruch 3, bei dem der zentrale Kern aus Kohle oder den Calciumcarbonatkörnern besteht.

5. Verfahren nach Anspruch 1, bei dem die Geschwindigkeit der Denitrifikation durch zen Zusatz einer Mischung von Spurenelementen gestiegert wird.

6. Verfahren nach einem der Ansprüche 1 bis 5, dadurch gekennzeichnet, daß das zu behandelnde Abwasser ein Industrieabwasser ist.

7. Aktiver Träger für die Denitrifikation, hergestellt nach dem Verfahren nach einem der Ansprüche 1 bis 4.

## Claims

1. Process for the biological denitrification of effluents which can contain up to 10 g/litre of nitrogen in the form of nitric acid, characterised in that the medium to be denitrified is brought into contact with strains of bacteria having a dentrifying action, which have been subjected to a pre-culture in a denitrification medium containing a substrate of calcium nitrate, under anaerobic conditions, in the presence of hydrocarbon substances, so as to form, in situ, an active denitrification support containing the denitrifying bacteria and granular calcium carbonate.

2. Process according to Claim 1, in which the denitrifying bacteria are selected by successive subcultures in liquid media which are made up taking account of the nature of the carbon substrate, the type of nitrates and the concentration of the latter in the effluents to be treated.

3. Process according to Claim 1, in which the active support consists of a central core to which the selected denitrifying bacteria and the calcium carbonate formed by the denitrification reaction are fixed.

4. Process according to Claim 3, in which the central core consists of charcoal or grains of calcium carbonate.

5. Process according to Claim 1, in which the denitrification rate is increased by adding a mixture of trace elements.

6. Process according to one of Claims 1 to 5, in which the effluent to be treated is an industrial effluent.

7. Active denitrification support formed in accordance with the process of one of Claims 1 to 4.